# EUROPEAN PATENT SPECIFICATION

(11) **EP 1 669 565 B1**
(45) Date of publication and mention of the grant of the patent: **04.04.2007**
(21) Application number: 05026721.0
(22) Date of filing: 07.12.2005
(51) Int. Cl.: F01N 3/035, F01N 3/021, F01N 3/023, F01N 3/08, F01N 3/10, F01N 9/00, F01N 3/20

(54) **Exhaust gas purifying apparatus for internal combustion engine**
Vorrichtung zur Abgasreinigung für eine Brennkraftmaschine
Dispositif de purification de gaz d'échappement pour moteur à combustion interne

(30) Priority: 08.12.2004 JP 2004355508
(43) Date of publication of application: 14.06.2006
(73) Proprietor: Toyota Jidosha Kabushiki Kaisha, Toyota-shi, Aichi-ken, 471-8571 (JP)
(72) Inventor: Gotou, Isamu, Toyota-shi, Aichi-ken, 471-8571 (JP); Kanto, Yuji, Toyota-shi, Aichi-ken, 471-8571 (JP)
(74) Representative: TBK-Patent

(56) References cited:
- EP-A- 0 815 925
- DE-A1-9102004 019 65
- US-A1- 2004 035 101
- PATENT ABSTRACTS OF JAPAN vol. 2003, no. 12, 5 December 2003 (2003-12-05) & JP 2004 278396 A (SAKURA SHOKAI:KK), 7 October 2004 (2004-10-07)
- PATENT ABSTRACTS OF JAPAN vol. 2003, no. 12, 5 December 2003 (2003-12-05) & JP 2004 239074 A (HINO MOTORS LTD), 26 August 2004 (2004-08-26)

## Description

### (BACKGROUND OF THE INVENTION)

### (Field of the Invention)

The present invention relates to an exhaust gas purifying apparatus for an internal combustion engine according to the preamble of claim 1 for purifying exhaust gas.

### (Description of Related Art)

In internal combustion engines, a filter is provided in an exhaust passage in order to prevent particulate matter contained in exhaust gas from being emitted to the atmosphere. The filter is adapted to trap particulate matter. However, there is a limit in the amount of the particulate matter that the filter can trap. If the amount of the particulate matter trapped by the filter becomes excessively large, the back pressure in the exhaust passage increases, which results in an increase in the engine load of the internal combustion engine.

In view of the above, there has been disclosed a technology for the oxidatively removing particulate matter trapped on the filter, in which an oxidation catalyst is provided in the upstream of the filter so that exhaust gas heated to a high temperature in the oxidation catalyst will flow into the filter to remove particulate matter trapped on the filter by oxidizing it (see Japanese Patent Publication NO. 7-111129, for example). According to this technology, temperature sensors for detecting the exhaust gas temperature are provided in the upstream and the downstream of the filter, and the quantity of heat generated in the oxidation catalyst is controlled based on the temperatures detected by them to thereby enable more appropriate oxidative removal of the trapped particulate matter. The document listed also discloses a technology relating to an exhaust gas purifying system for an internal combustion engine.

### (1) Japanese Patent Application Laid-Open NO. 2004-68651

In the case where an oxidation catalyst and a filter is provided in series in an exhaust passage of an internal combustion engine to remove particulate matter contained in the exhaust gas, particulate matter contained in the exhaust gas is not only trapped by the filter but also attaches to an end face of the oxidizing catalyst disposed upstream of the filter, thereby possibly causing clogging of the oxidation catalyst. Clogging of the oxidation catalyst leads to a decrease in the cross sectional area in the oxidation catalyst through which the exhaust gas effectively flows. Thus, the flow rate of the exhaust gas in the oxidation catalyst increases accordingly.

This leads, consequently, to an increase in the space velocity (SV) in the oxidation catalyst, which in turn leads to an increase in the amount of slipping-through fuel contained in the exhaust gas, though the fuel contained in the exhaust gas is intended to generate heat by its oxidation reaction in the oxidation catalyst. When the amount of the slipping-through fuel increases, it becomes difficult to generate sufficient heat in the oxidation catalyst, and accordingly it becomes difficult to sufficiently raise the temperature of the exhaust gas flowing into the filter. Therefore, there is a possibility that the particulate matter trapped on the filter cannot be removed by oxidation smoothly.

DE 10 2004 019 659 A1 discloses an exhaust gas purifying system for an internal combustion engine comprising an oxidation catalyst having an oxidizing ability, provided in an exhaust passage of an internal combustion engine, a filter that can trap particulate matter contained in exhaust gas, provided in the exhaust passage downstream of said oxidation catalyst, temperature detection means for detecting or estimating temperatures of an upstream portion and a downstream portion of said filter and fuel supply means for supplying fuel into exhaust gas flowing into said oxidation catalyst.

EP 0 815 925 A1 discloses an apparatus for purifying an exhaust gas emitted from a diesel engine including an oxidizing catalyst, and a sulfate-storing-and-reducing catalyst.

US 2004/035101 A1 discloses a regeneration control method for regenerating a continuously regenerating diesel particulate filter device.

JP 2004 278396 A discloses an exhaust emission control device that eliminates a discharge of particulate matter by burning the particulate matter by a heater, reducing the discharge of the particulate matter, eliminating clogging of an oxidation catalyst and oxidizing the particulate matter by the oxidation catalyst.

JP 2004 239074 A discloses an exhaust emission control device for preventing clogging of an oxidation catalyst equipped in a front stage of a catalyst regenerative particulate filter.

### (Summary of the Invention)

The present invention has been made in view of the above-described problem and has as an object to determine, in an exhaust gas purifying system of an internal combustion engine having an oxidation catalyst and a filter provided in series in an exhaust passage, clogging of the oxidation catalyst with improved accuracy and to prevent malfunctions of the exhaust gas purifying system that clogging of the oxidation catalyst may cause from occurring.

This object is achieved by an exhaust gas purifying system having the features of claim 1. Advantageous further developments are set out in the dependent claims.

According to the present invention, attention has been focused on the temperature gradient that appears in the filter while oxidative removal of the particulate matter trapped on the filter is effected, in other words, while oxidation heat is generated in the oxidation catalyst. This is because when clogging occurs in the oxidation catalyst, it becomes difficult to sufficiently raise the temperatures of the exhaust gas flowing into the filter, and the temperature gradient in the interior of the filter, which is disposed downstream of the oxidation catalyst, becomes large.

Thus, an exhaust gas purifying system for an internal combustion engine according to the present invention comprises an oxidation catalyst having an oxidizing ability, provided in an exhaust passage of an internal combustion engine, a filter that can trap particulate matter contained in exhaust gas, provided in the exhaust passage downstream of said oxidation catalyst, temperature detection means for detecting or estimating temperatures of an upstream portion and a downstream portion of said filter, fuel supply means for supplying fuel into exhaust gas flowing into said oxidation catalyst, and clogging determination means adapted to make such a determination that there is clogging of said oxidation catalyst, if the difference in the temperature of the upstream portion and the temperature of the downstream portion detected by said temperature detection means is larger than a predetermined value while regeneration control for said filter is performed by supplying fuel to exhaust gas flowing into said oxidation catalyst by said fuel supply means.

In the above-described exhaust gas purifying system for an internal combustion engine, purification of the exhaust gas, especially removal of particulate matter contained in the exhaust gas is effected by the oxidation catalyst and the filter that are provided in series in the exhaust passage. Specifically, particulate matter contained in the exhaust gas is trapped by the filter so that the particulate matter is prevented from being emitted to the atmosphere. The particulate matter thus trapped is oxidatively removed by filter regeneration control, in which the particulate matter trapped is exposed to oxidation heat that has been generated by oxidation of fuel supplied through the fuel supply means by means of the oxidation catalyst.

When particulate matter adheres to the oxidation catalyst to cause clogging, the possibility that fuel added to the exhaust gas through the fuel supply means slips through the oxidation catalyst becomes high, and the quantity of oxidation heat generated in the oxidation catalyst decreases. Consequently, the temperature of the exhaust gas flowing into the filter decreases as compared to that in the case where there is not clogging of the oxidation catalyst, whereby the temperature of the upstream portion of the filter also decreases. On the other hand, fuel that has slipped through the oxidation catalyst is carried by the flow of the exhaust gas to react, in the downstream portion of the filter, with the trapped particulate matter (an oxidation reaction), so that the temperature of the downstream portion of the filter becomes about as high as the temperature in the case where there is not clogging of the oxidation catalyst. Therefore, the temperature of the exhaust gas flowing out of the filter does not change significantly regardless of whether there is clogging of the oxidation catalyst or not.

To summarize, when the filter regeneration control is effected, the difference between the temperature of the upstream portion of the filter and the temperature of the downstream portion thereof varies depending on the degree of clogging of the oxidation catalyst. Specifically, as the degree of clogging of the oxidation catalyst becomes high, the temperature of the exhaust gas flowing into the filter decrease, and the difference between the temperatures of the upstream portion and the downstream portion of the filter increases.

In view of this, the clogging determination means equipped in the exhaust gas purifying system for an internal combustion engine according to the present invention is adapted to determine clogging of the oxidation catalyst on the basis of this temperature difference. In connection with this, the aforementioned predetermined value of the positional temperature difference in the filter that is used as a criterion for determining clogging of the oxidation catalyst may be determined by measuring the relationship between the oxidation catalyst and its clogging in advance by, for example, experiments. As per the above, on the basis of the difference in the temperatures of the upstream portion and the downstream portion of the filter, it is possible to determine clogging of the oxidation catalyst provided on the upstream side of the filter with improved accuracy.

When clogging occurs in the oxidation catalyst, the temperature of the exhaust gas flowing into the filter decreases, as described above. If normal filter regeneration control process is continued with the oxidation catalyst being in the clogged state, there is a risk that the regeneration control may fail. Therefore, in the above-described exhaust gas purifying system for an internal combustion engine, when it is determined by said clogging determination means that clogging occurs in said oxidation catalyst while fuel supply through said fuel supply means is feedback-controlled based on the temperatures of portions of said filter, the feedback control of the fuel supply may be prohibited.

If the oxidation catalyst is clogged while the quantity of fuel supply through the fuel supply means is feedback-controlled based on the temperatures of portions of the filter, the temperature of the exhaust gas flowing into the filter will not be increased in spite of the fuel supply. Consequently, the quantity of fuel supply through the fuel supply means will be further increased, and a larger quantity of fuel will be consumed as compared to the case where the oxidation catalyst is not clogged during the feedback control. In some cases, it is not possible to increase the filter temperature to a target temperature even if the quantity of fuel supply is greatly increased, and failure of the feedback control may be caused. Therefore, when it is determined by the clogging determination means that there is clogging of the oxidation catalyst, the feedback control is prohibited, thereby making it possible to suppress waste of fuel supplied.

In the case where the above-described exhaust gas purifying system of an internal combustion engine is further equipped with fuel supply appropriateness determination means for determining whether or not fuel supply through said fuel supply means is performed appropriately, determination by said fuel supply appropriateness determination means may be prohibited if it is determined by said clogging determination means that there is clogging of said oxidation catalyst.

The fuel supply appropriateness determination means has a function of determining whether or not fuel supply through the fuel supply means is effected with an appropriate fuel quantity in the filter regeneration control. In the case where it is determined by the clogging determination means that there is clogging of the oxidation catalyst, there should be a decrease in the temperature of the exhaust gas flowing into the filter as described above. Consequently, there is a risk that it may be erroneously determined by the fuel supply appropriateness determination means that a decrease in the quantity of fuel supplied through the fuel supply means is occurring or an appropriate quantity of fuel is not supplied for filter regeneration process. In view of this, determination by the fuel supply appropriateness determination means is prohibited in such a case, thereby making it possible to avoid failure of the exhaust gas purifying system caused by such an erroneous determination.

In the case where the above-described exhaust gas purifying system for an internal combustion engine is further equipped with deposit amount estimation means for estimating the' amount of the particulate matter deposited on the filter while filter regeneration control is performed, the amount of the particulate matter deposited on the filter may be estimated on the basis of the temperature of the downstream portion of the filter detected or estimated by said temperature detection means, when it is determined by said clogging determination means that there is clogging of the oxidation catalyst.

As described above, the deposit amount estimation means has a function of estimating the amount of the particulate matter deposited on the filter while filter regeneration control is performed. Generally, the filter has a little temperature gradient through it, and there are a portion at which particulate matter deposited on the filter is easy to be oxidatively removed and a portion at which particulate matter deposited on the filter is not easy to be oxidatively removed. The lower the temperature of a portion of the filter is in the temperature distribution in the filter, the harder to be oxidatively removed the particulate matter depositing thereon is. Therefore, in the filter regeneration control, the temperature of the filter is controlled on the basis of the temperature of the portion having the lower temperature, thereby making it possible to reduce the amount of the particulate matter that remains uncombusted on the filter.

However, when it is determined by the clogging determination means that there is clogging of the oxidation catalyst, there should be a decrease in the temperature of the exhaust gas flowing into the filter as described above. Therefore, if the filter regeneration control is performed on the basis of the temperature of the upstream portion of the filter, namely the temperature of a portion near the portion at which the exhaust gas flows into the filter, there is a risk that the temperature of the filter will not rise and the filter regeneration control will be prolonged to cause an increase in the quantity of fuel required for the regeneration control. In view of this, in such cases, the filter regeneration control is performed while estimating the deposit amount of the particulate matter on the basis of the temperature of the downstream portion of the filter, the temperature of which does not vary significantly regardless of whether there is clogging of the oxidation catalyst or not, thereby making it possible to perform regeneration control within a moderate time.

In the above-described exhaust gas purifying system for an internal combustion engine, a target temperature to be reached in said filter regeneration control may be set based on the temperature of the downstream portion of the filter that is detected or estimated by said temperature detection means when it is determined by said clogging determination means that there is clogging of said oxidation catalyst.

When it is determined by said clogging determination means that there is clogging of said oxidation catalyst, there should be a decrease in the temperature of the exhaust gas flowing into the filter. Therefore, if the temperature of the entire filter is raised on the basis of the temperature of the upstream portion of the filter, there is a risk that the temperature of the downstream portion of the filter will be excessively raised. In view of this, the filter regeneration control is performed on the basis of the temperature of the downstream portion of filter, thereby making it possible to prevent an excessive temperature rise of the filter during the filter regeneration control.

As per the above, in an exhaust gas purifying system for an internal combustion engine having an oxidation catalyst and a filter provided in series in an exhaust passage, it is possible to determine clogging of the oxidation catalyst with improved accuracy and to prevent failures that can occur in the exhaust gas purifying system due to clogging of the oxidation catalyst.

### (Brief Description of the Drawings)

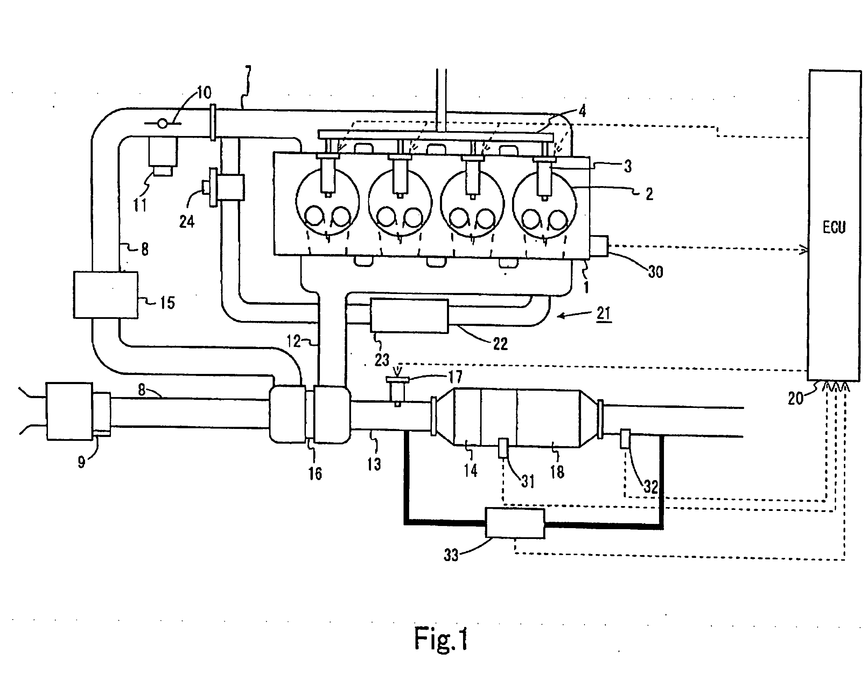

Fig. 1 is a diagram schematically showing an internal combustion engine and its exhaust gas purifying system according to an embodiment of the present invention.

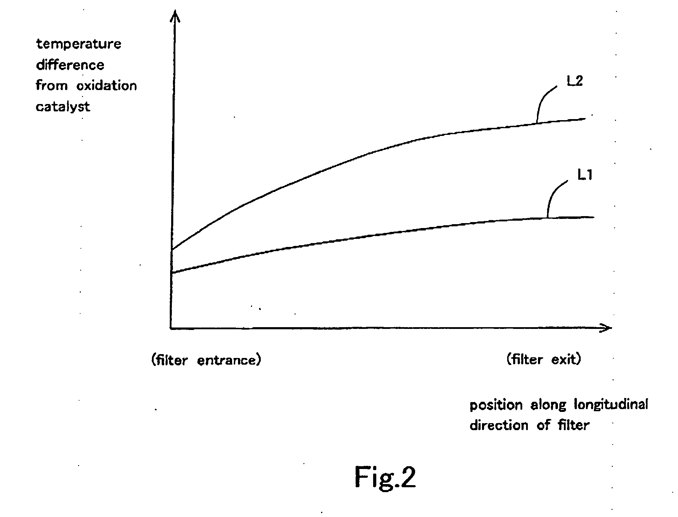

Fig. 2 shows temperature difference between portions of a filter caused by clogging of an oxidation catalyst 14, the oxidation catalyst and the filter being provided in the exhaust gas purifying system for an internal combustion engine according to the first embodiment of the present invention.

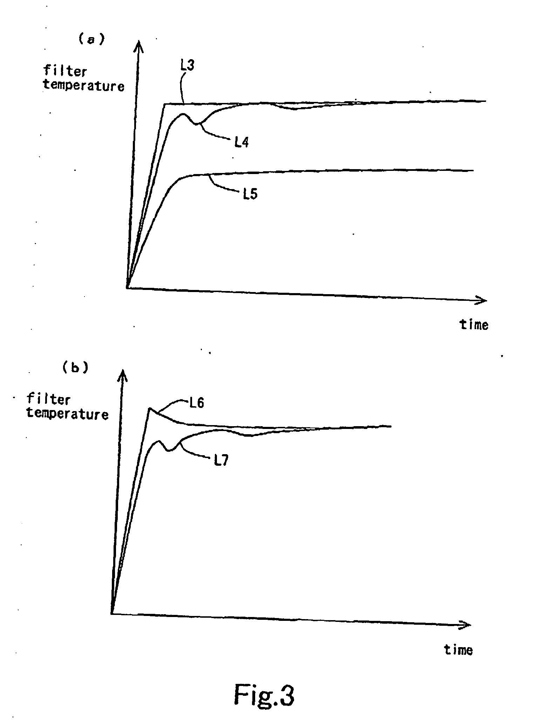

Fig. 3 shows changes in the temperature of the upstream portion of the filter (a) and changes in the temperature of the downstream portion of the filter (b) when filter regeneration control is performed in the exhaust gas purifying system for an internal combustion engine according to the first embodiment of the present invention.

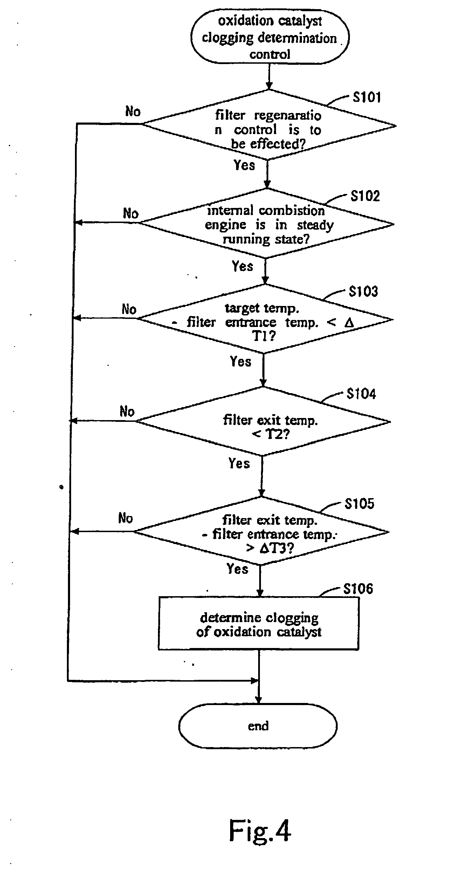

Fig. 4 is a flow chart of a process relating to an oxidation catalyst clogging determination control for determining clogging of the oxidation catalyst. The process is executed in the exhaust gas purifying system for an internal combustion engine according to the first embodiment of the present invention.

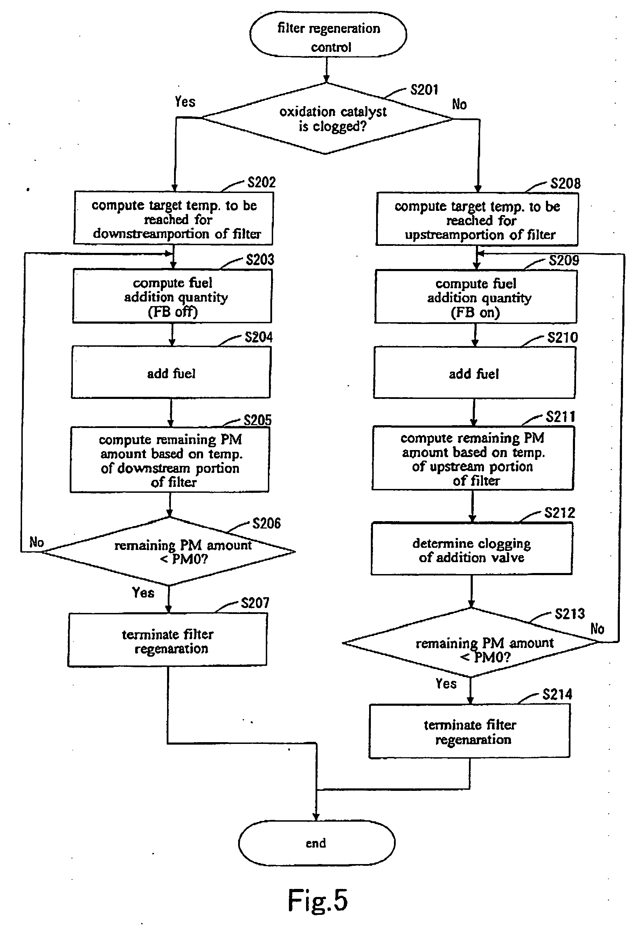

Fig. 5 is a flow chart of a process relating to filter regeneration control that takes into consideration presence/absence of clogging of the oxidation catalyst. The process is executed in the exhaust gas purifying system for an internal combustion engine according to the first embodiment of the present invention.

### (Description of the Preferred Embodiments)

In the following, an embodiment of the exhaust gas purifying system for an internal combustion engine according to the present invention will be described with reference to the accompanying drawings.

Fig. 1 is a block diagram schematically showing the configuration of an internal combustion engine 1 to which the exhaust gas purifying system according to the present invention is applied and its control system. The internal combustion engine 1 is a compression ignition internal combustion engine having four cylinders 2. The internal combustion engine 1 has fuel injection valves 3 for directly injecting fuel into the combustion chambers of the cylinders 2. Each fuel injection valve 3 is connected with a pressure accumulation chamber 4 for storing fuel that is pressurized to a predetermined pressure. The internal combustion engine is connected with an intake manifold 7. Branches of the intake manifold 7 are connected with the respective combustion chambers via intake ports. The internal combustion engine 1 is also connected with an exhaust manifold 12. The branches of the exhaust manifold 12 are connected with the respective combustion chambers via an exhaust ports. An intake valve and an exhaust valve are provided at each intake port and each exhaust port respectively.

The intake manifold 7 is connected with an intake pipe 8. An air flow meter 9 for detecting the quantity of the intake air flowing in the intake pipe 8 is provided in the upstream portion of the intake pipe 8, and an intake throttle valve 10 for regulating the flow rate of the intake air flowing in the intake pipe 8 is provided downstream of the air flow meter 9. To this intake throttle valve 10, an intake air throttle actuator 11 including a step motor or the like for driving the intake throttle valve 10 to close/open it is attached.

A compressor portion of a supercharger 16 that operates using energy of the exhaust gas as a drive source is provided in the intake pipe 8 upstream of the intake throttle valve 10. A turbine portion of the supercharger 16 is provided in the exhaust manifold 12. The supercharger 16 is what is a so-called variable volume supercharger, which has a movable nozzle vane in its interior. The supercharged pressure provided by the supercharger 16 is controlled by adjusting the degree of opening of the nozzle vane. In the intake pipe 8 downstream of the supercharger 16 and upstream of the intake throttle valve 10, there is provided an intercooler 15 for cooling intake air that has been pressurized by the supercharger 16 to have a high temperature.

The turbine portion of the supercharger 16 is connected with the exhaust pipe 13, which in turn is connected with a muffler in the downstream. In the exhaust pipe 13, there is provided oxidation catalyst 14 having an oxidizing ability and, in the downstream thereof, a filter 18 for trapping particulate matter contained in the exhaust gas. A fuel addition valve 17 for adding fuel into the exhaust gas is provided in the exhaust pipe 13 upstream of the oxidation catalyst 14.

The internal combustion engine 1 is provided with an EGR apparatus 21. EGR apparatus 21 is adapted to recirculate a part of the exhaust gas flowing in the exhaust manifold 12 to the intake manifold 7. The EGR apparatus 21 is composed of an EGR passage 22 extending from the exhaust manifold 12 (upstream side) to the intake manifold 7 (downstream side), an EGR cooler 23 for cooling the EGR gas and an EGR valve 24 for adjusting the flow rate of the EGR gas, the EGR cooler 23 and the EGR valve 24 being provided in the EGR passage 22 in the mentioned order from upstream to downstream.

To the internal combustion engine 1, an electronic control unit 20 (which will be hereinafter referred to as the ECU) that controls the internal combustion engine 1 is annexed. The ECU 20 includes a ROM, RAM or the like that stores various programs and maps that will be described later in addition to a CPU. The ECU 20 is a unit that controls the running state of the internal combustion engine 1 in accordance with running conditions of the internal combustion engine 1 and driver's demands.

The fuel injection valve 3 is opened/closed by a control signal from the ECU 20. More specifically, the timing and the quantity of fuel injection through the fuel injection valve 3 are controlled by commands from the ECU 20 in accordance with the running state of the internal combustion engine 1 in terms of e.g. the engine load and the rotation speed every time the fuel injection is effected. The fuel addition valve 17 is also controlled by commands from the ECU 20.

A crank position sensor 30 is electrically connected with the ECU 20. The ECU 20 receives a signal indicative of the rotational angle of the output shaft of the internal combustion engine 1, and detects the rotation speed of the internal combustion engine 1 and the position of the piston in each cylinder 2. Exhaust gas temperature sensors 31 and 32 that detect the temperature of the exhaust gas are respectively provided on the upstream side and the downstream side of the filter 18. These temperature sensors are electrically connected with the ECU 20. In addition, a pressure difference sensor 33 that detects the difference in the exhaust gas pressure in the exhaust pipe 13 between upstream and downstream of the filter 18 is provided and electrically connected with the ECU 20.

In the exhaust gas purifying system for the internal combustion engine 1 having the above-described structure, particulate matter contained in the exhaust gas is trapped by the filter 18. As the amount of the particulate matter trapped on the filter 18 increases, the engine load of the internal combustion engine 1 increases. Therefore, when the amount of the trapped particulate matter exceeds a predetermined amount, fuel addition is effected to add fuel into the exhaust gas through the fuel addition valve 17. The fuel thus added is oxidized by the oxidation catalyst 14, so that the particulate matter trapped on the filter is exposed to heat generated by the oxidation and carried by the exhaust gas, whereby oxidative removal of the trapped particulate matter (i.e. regeneration of the filter 18) is achieved.

Particulate matter contained in the exhaust gas sometimes deposits not only on the filter 18 but also on an end face of the oxidation catalyst 14. Deposition of particulate matter on the oxidation catalyst 14 leads to a decrease in the effective cross section of the oxidation catalyst 14 through which the exhaust gas flows, which in turn leads to an increase in the speed of flow of the exhaust gas in the oxidation catalyst 14. Thus, there is a significant possibility that the fuel that has been added to the exhaust gas through the fuel addition valve 17 for regenerating filter 18 will slip through the oxidation catalyst 14 without being oxidized sufficiently by the oxidation catalyst 14. This invites a decrease in the temperature of the exhaust gas flowing into the filter 18 during regeneration of the filter 18.

Fig. 2 shows the temperature difference between portions of the filter 18 and the oxidation catalyst 14 for the case where no particulate matter has deposited on the oxidation catalyst 14 (represented by curve L1) and for the case where particulate matter has deposited on the oxidation catalyst 14 to some extent (represented by curve L2). As described above, as particulate matter deposits on the oxidation catalyst 14, the temperature of the exhaust gas flowing into the filter 18 decreases. Then, the fuel that has slipped through the oxidation catalyst 14 is oxidized in the downstream region of the filter 18 (i.e. the region in the filter 18 that is closer to the exit side). Consequently, in the case where there is particulate matter deposited on the oxidation catalyst 14, the temperature gradient between the entrance and the exit of the filter 18 becomes large as will be seen from curve L2 in Fig. 2.

Fig. 3 shows changes in the temperature of portions of the filter 18 while regeneration control for the filter 18 is effected. Fig. 3(a) shows changes in the temperature of an upstream portion of the filter 18, where curve L3 represents changes in the target temperature of that portion, that is, estimated changes in the temperature of that portion when the temperature rises with fuel addition through the fuel addition valve 17, curve L4 represents actual changes in the temperature of that portion in the case where there is no clogging of the oxidation catalyst 14, and curve L5 represents actual'changes in the temperature of that portion in the case where there is clogging of the oxidation catalyst 14.

When there is clogging of the oxidation catalyst 14, the quantity of heat generated by oxidation in the oxidation catalyst 14 decreases as described above, and the temperature of the exhaust gas flowing into the filter 18 decreases. Therefore, the temperature of the upstream portion of the filter 18 does not rise sufficiently to the target temperature. Particularly in the upstream portion of the filter 18 into which the exhaust gas flows, the temperature rise tends to be blunted due to flow of the exhaust gas. Consequently, there results a large difference in changes in the temperature of the upstream portion of the filter 18 between the case where there is clogging of the oxidation catalyst 14 and the case where there is not.

On the other hand, Fig. 3(b) shows changes in the temperature of an downstream portion of the filter 18, where curve L6 represents actual changes in the temperature of that portion in the case where there is no clogging in the oxidation catalyst 14, and curve L7 represents actual changes in the temperature of that portion in the case where there is clogging of the oxidation catalyst 14.

As will be seen from Fig. 3(b), in the downstream portion of the filter 18, the temperature finally reached is substantially the same between the case where there is clogging of the oxidation catalyst 14 and the case where there is not, though there is a little difference in the way in which the temperature firstly rises. Reasoning for this is that even in the case where there is clogging of the oxidation catalyst 14, substantially the same temperature will be reached by oxidation, occurring in the filter 18, of the fuel that has slipped through the oxidation catalyst 14.

In view of the above fact, it is possible to determine, based on changes in the temperature of the respective portions of the filter 18 shown in Figs. 2, 3(a) and 3(b), whether or not there is clogging of the oxidation catalyst 14. In other words, clogging of the oxidation catalyst 14 can be detected by examining the temperature of the exhaust gas flowing into the filter 18, which will affects the temperature of the upstream portion of the filter 18, and the temperature of the exhaust gas flowing out of the filter 18, which will affects the temperature of the downstream portion of the filter 18.

To put it differently, when there is clogging of the oxidation catalyst 14, although the temperature of the exhaust gas flowing into the filter 18 decreases, the temperature of the exhaust gas flowing out of the filter 18 is hard to decrease since the temperature of the downstream portion of the filter 18 is substantially the same as that in the case where there is no clogging in the oxidation catalyst 14. Accordingly, when there is clogging of the oxidation catalyst 14, the difference between the temperature of the exhaust gas flowing into the filter 18 and the temperature of the exhaust gas flowing out of the filter 18 becomes larger. This make it possible to determine clogging of the oxidation catalyst 14 based on that temperature difference.

Fig. 4 is a flow chart of a control process (which will be referred to as "oxidation catalyst clogging determination control" hereinafter) for determining clogging of the oxidation catalyst 14. The oxidation catalyst clogging determination control in this embodiment is a routine that is executed by the ECU 20 at a constant cycle.

In step S101 a determination is made as to whether or not regeneration control for the filter 18 is to be executed. Specifically, if the detection signal of the pressure difference sensor 33 indicates a pressure higher than or equal to a predetermined pressure, it is determined that the regeneration control is to be executed to oxidatively remove the particulate matter trapped on the filter 18. If it is determined that the regeneration control for the filter 18 is to be executed, the process proceeds to step S102. If it is determined that the regeneration control is not to be executed, this control routine is terminated.

In step S102, a determination is made as to whether or not the internal combustion engine 1 is in a steady running state. The steady running state refers to the running state in which significant changes in the engine load or the engine speed of the internal combustion engine 1 do not occur. The steady running state includes, for example, a constant speed running state in which deceleration or acceleration is not effected and an idling state. The reason why the determination is made as to whether or not the internal combustion engine 1 is in a steady state is that when the engine load or the engine speed of the internal combustion engine 1 changes significantly, the exhaust gas temperature also changes accordingly, and therefore it is difficult to determine clogging of the oxidation catalyst 14 based on the difference between the temperature of the exhaust gas flowing into the filter 18 and the temperature of the exhaust gas flowing out of the filter 18. If it is determined that the internal combustion engine 1 is in a steady running state, the process proceeds to step S103, and if it is determined that the internal combustion engine 1 is not in a steady running state, this control routine is terminated.

In step S103, a determination is made as to whether or not the difference between the temperature of the exhaust gas at the entrance of the filter 18 and a target temperature in the regeneration control for the filter 18 is smaller than a predetermined temperature difference ΔT1. The target temperature is a temperature to which the temperature of the filter 18 should be raised in order to oxidatively remove the particulate matter trapped, in the regeneration control for the filter 18. The temperature of the exhaust gas at the entrance of the filter 18 is estimated based on the temperature detected by the exhaust gas temperature sensor 31.

The reason why a determination is made as to whether or not the aforementioned temperature difference is smaller than a predetermined temperature difference ΔT1 is that when the temperature difference is large, namely when a relatively large amount of fuel is added through the fuel addition valve 17 in the regeneration control to cause a steep temperature rise of the filter 18, there is a possibility that a determination error may be caused in the above-described determination of clogging of the oxidation catalyst 14 based on the difference between the temperature of the exhaust gas flowing into the filter 18 and the temperature of the exhaust gas flowing out of the filter 18. In view of this, the predetermined temperature difference ΔT1 is set as a temperature difference between the target temperature and the exhaust gas temperature at the entrance of the filter 18 in the regeneration control that can cause a determination error. When the temperature difference is smaller than the predetermined temperature difference ΔT1, there is no risk of determination error, and the process proceeds to step S104. When the temperature difference is not smaller than the predetermined temperature difference ΔT1, this control routine is terminated.

In step S104, a determination is made as to whether or not the temperature of the exhaust gas at the exit of the filter 18 is lower than a predetermined temperature T2. The temperature of the exhaust gas at the exit of the filter 18 is estimated based on the temperature detected by the exhaust gas temperature sensor 32. The reason why a determination is made as to whether or not the temperature of the exhaust gas at the exit of the filter 18 is lower than a predetermined temperature T2 is that if an excessive temperature rise occurs in the downstream portion of the filter 18, in which portion the temperature particularly rises in the regeneration control, there is a possibility that a determination error may be caused in determining clogging of the oxidation catalyst 14 based on the difference between the temperature of the exhaust gas flowing into the filter 18 and the temperature of the exhaust gas flowing out of the filter as described above. In view of this, the predetermined temperature T2 is set as a temperature of the exhaust gas at the exit of the filter 18 at the time when an excessive temperature rise of the filter 18 occurs. When the temperature of the exhaust gas at the exit of the filter 18 is lower than the predetermined temperature T2, there is no risk of determination error, and the process proceeds to step S105. When the temperature of the exhaust gas at the exit of the filter 18 is not lower than the predetermined temperature T2, this control routine is terminated.

In step S105, in order to determine clogging of the oxidation catalyst 14 based on the difference between the temperature of the exhaust gas flowing into the filter 18 and the temperature of the exhaust gas flowing out of the filter 18 as described above, a determination is made as to whether or not the difference between the temperature of the exhaust gas at the exit of the filter 18 estimated based on the temperature detected by the exhaust gas temperature sensor 32 and the temperature of the exhaust gas at the entrance of the filter 18 estimated based on the temperature detected by the exhaust gas temperature sensor 31 is larger than a predetermined temperature difference ΔT3. The predetermined temperature ΔT3 is the temperature difference that will be created when clogging of the oxidation catalyst 14 occurs. If it is determined that the aforementioned temperature difference is larger than the predetermined temperature ΔT3, the process proceeds to step S106. If it is determined that the temperature difference is not larger than the predetermined temperature ΔT3, this control routine is terminated.

In step S106, it is determined that there is clogging of the oxidation catalyst 14 based on the determination made in step S105. The ECU 20 that executes the process of steps S105 and S106 constitutes the clogging determination means in the present invention. After completion of step S106, this control routine is terminated.

According to this control, it is possible to determine clogging of the oxidation catalyst 14 with improved accuracy by basing on changes in the temperature of some portions of the filter 18 and changes in the temperature of the exhaust gas that might be caused by clogging of the oxidation catalyst 14.

If regeneration control for the filter 18 is effected in the state where there is clogging of the oxidation catalyst 14, it is possible that the regeneration control is not performed appropriately. This is because when there is clogging of the oxidation catalyst 14, the fuel added through the fuel addition valve 17 is not oxidized sufficiently. In the following, regeneration control for the filter 18 (which will be referred to as filter regeneration control) that is effected in the state in which there is clogging of the oxidation catalyst 14 will be described with reference to Fig. 5.

In step S201, the oxidation catalyst clogging determination control that has been described in connection with Fig. 4 is executed, so that a determination is made as to whether or not there is clogging of the oxidation catalyst 14. According to this control, the regeneration control of the filter 18 differs between the case where there is clogging of the oxidation catalyst 14 and the case where there is not. Specifically, if it is determined that the oxidation catalyst 14 is in a clogged state, the process steps of S202 through S207 are executed, and if it is determined that the oxidation catalyst 14 is not in a clogging state, the process steps of S208 through S214 are executed.

Firstly, the regeneration control for the filter 18 that is performed when it is determined in step S201 that the oxidation catalyst 14 is in a clogged state will be described. In step S202, a target temperature to be reached for the downstream portion of the filter 18 is computed. The target temperature is a temperature to which the temperature of the filter 18 should be raised so as to oxidatively remove the particulate matter trapped on the filter 18 sufficiently. The reason why the reference of temperature rise in the regeneration control is made to the downstream portion of the filter 18 is that since when clogging occurs in the oxidation catalyst 14, the temperature of the exhaust gas flowing into the filter 18 decreases and the temperature of the upstream portion of the filter 18 is not raised sufficiently (see curve L5 in Fig. 3(a)), if the reference is to the upstream portion, there is a risk that the time required for the regeneration control will be needlessly prolonged. After completion of step S202, the process proceeds to step S203

In step S203, the quantity of fuel to be added through the fuel addition valve 17 is computed. The quantity of the fuel to be added is not determined by a feedback control based on the difference between the target temperature computed in step S202 and the current temperature of the downstream portion of the filter 18 estimated by the exhaust gas temperature sensor 32, but it is determined based on a two-dimensional map that has as parameters the target temperature to be reached and the temperature of the downstream portion of the filter 18. In connection with this, depending on the type of the two-dimensional map, a fuel addition quantity may be computed taking into account a decrease in the oxidation heat caused by clogging of the oxidation catalyst 14. After completion of step S203, the process proceeds to step S204.

In step S204, fuel is added to the exhaust gas through the fuel addition valve 17 in accordance with the fuel addition quantity computed in step S203. Thus, the temperature of the filter 18 is raised and oxidative removal of the particulate matter trapped is performed. After completion of step S204, the process proceeds to step S205.

In step S205, the amount of the particulate matter remaining on the filter 18 is calculated based on the temperature of the downstream portion of the filter 18, taking into account the amount of the particulate matter (PM) that has been oxidatively removed by the regeneration control. The ECU 20 that executes the process of calculating the amount of the remaining particulate matter constitutes the deposit amount estimation means in the present invention. The process of calculating the amount of the remaining particulate matter executed in step S211 that will be described later is the same as this process. The reason why the calculation is performed on the basis of the temperature of the downstream portion of the filter 18 is that since when clogging occurs in the oxidation catalyst 14, the temperature of the exhaust gas flowing into the filter 18 decreases and the temperature of the upstream portion of the filter 18 is not raised sufficiently as described before, it is difficult to calculate the amount of the particulate matter that has been oxidatively removed accurately on the basis of the temperature of the upstream portion of the filter 18. After completion of step S205, the process proceeds to step S206.

In step S206, a determination is made as to whether or not the amount of the remaining particulate matter calculated in step S205 is smaller than a predetermined amount PM0. The predetermined amount PM0 is the threshold value for determining to terminate the regeneration process for the filter 18. If it is determined that the amount of the remaining particulate matter is smaller than the predetermined amount PM0, the process proceeds to step S207, where the regeneration control for the filter 18 is terminated, and then this process routine is ended. If it is determined that the amount of the remaining particulate matter is not smaller than the predetermined amount PM0, the process step of S203 and the subsequent steps are repeated.

Next, the regeneration control for the filter 18 that is performed when it is determined in step S201 that the oxidation catalyst 14 is not in a clogged state or normal regeneration control will be described. In step S208, a target temperature to be reached for the upstream portion of the filter 18 is computed. The reason why the reference of temperature rise in the regeneration control is made to the upstream portion of the filter 18 is that since the temperature of the upstream portion of the filter 18 is relatively low as compared to the downstream portion due to inflowing of the exhaust gas, when the reference is made in the regeneration control to the temperature of the upstream portion that has a relatively low temperature, it is possible to raise the temperature of the filter 18 as a whole sufficiently. In this case, since a decrease in the temperature of the exhaust gas caused by clogging of the oxidation catalyst 14 as described above does not occur, when the reference is made to the upstream portion, there is no risk that the time required for the regeneration control will be prolonged. After completion of step S208, the process proceeds to step S209.

In step S209, the quantity of fuel to be added through the fuel addition valve 17 is computed. In this case, contrary to the process of step S203, the quantity of the fuel to be added is determined by a feedback control based on the difference between the target temperature computed in step S208 and the current temperature of the upstream portion of the filter 18 estimated by the exhaust gas temperature sensor 32. Since a decrease in the temperature of the exhaust gas caused by clogging of the oxidation catalyst 14 as described above does not occur, there is no risk that the fuel addition amount will be excessively increased by performing the feedback control. After completion of step S209, the process proceeds to step S210.

In step S210, fuel is added to the exhaust gas through the fuel addition valve 17 in accordance with the fuel addition quantity computed in step S209. Thus, the temperature of the filter 18 is raised and oxidative removal of the particulate matter trapped is performed. After completion of step S210, the process proceeds to step S211.

In step S211, the amount of the particulate matter remaining on the filter 18 is calculated based on the temperature of the upstream portion of the filter 18, taking into account the amount of the particulate matter (PM) that has been oxidatively removed by the regeneration control. The reason why the calculation is performed on the basis of the temperature of the downstream portion of the filter 18 contrary to step 205 is that since a decrease in the temperature of the exhaust gas caused by clogging of the oxidation catalyst 14 as described above does not occur, it is possible to calculate the amount of the particulate matter that has been oxidatively removed accurately on the basis of the temperature of the upstream portion of the filter 18, and in addition consistency of the process with steps S208 and S209 should be maintained. After completion of step S211, the process proceeds to step S212.

In step S212, a determination is made as to whether or not the fuel addition valve 17 is clogged. The ECU 20 that executes determination of clogging of the fuel addition valve 17 constitutes the fuel supply appropriateness determination means in the present invention. Specifically, a determination is made as to whether or not a quantity of fuel to be added to the exhaust gas has been appropriately added, based on the relationship between the quantity of fuel to be added through the fuel addition valve 17 and the temperature of the upstream portion of the filter 18, namely the relationship between the quantity of fuel to be added through the fuel addition valve 17 and the oxidation heat quantity in the oxidation catalyst 14. Such a determination is not made in the process for the case where the oxidation catalyst 14 is in a clogged state (steps S202 through S207). This is because when the oxidation catalyst 14 is in a clogged state, a determination error can occur, since the oxidation catalyst 14 cannot oxidize the added fuel sufficiently. After completion of step S212, the process proceeds to step S213.

In step S213, a determination is made as to whether or not the amount of the remaining particulate matter calculated in step S211 is smaller than a predetermined amount PM0. If it is determined that the amount of the remaining particulate matter is smaller than the predetermined amount PM0, the process proceeds to step S214, where the regeneration control for the filter 18 is terminated, and then this process routine is ended. If it is determined that the amount of the remaining particulate matter is not smaller than the predetermined amount PM0, the process step of S209 and the subsequent steps are repeated.

According to this control, the regeneration control of the filter 18 differs between the case where there is clogging of the oxidation catalyst 14 and the case where there is not. Specifically, when the oxidation catalyst 14 is in a clogged state, each processing is effected basically on the basis of the temperature of the downstream portion of the filter 18, and feedback control of the fuel addition quantity and determination of clogging of the fuel addition valve 17 are prohibited. Thus, the time required for regeneration control for the filter 18 can be made as short as possible, and it is possible to prevent erroneous control of fuel addition and an error in determining clogging of the fuel addition valve 17.

An exhaust gas purifying system for an internal combustion engine comprises an oxidation catalyst having an oxidizing ability, provided in an exhaust passage of an internal combustion engine, a filter that can trap particulate matter contained in exhaust gas, provided in the exhaust passage downstream of said oxidation catalyst, temperature detection means for detecting or estimating temperatures of an upstream portion and a downstream portion of said filter, fuel supply means for supplying fuel into exhaust gas flowing into said oxidation catalyst, and clogging determination means adapted to make such a determination that there is clogging of said oxidation catalyst, if the difference in the temperature of the upstream portion and the temperature of the downstream portion detected by said temperature detection means is larger than a predetermined value while regeneration control for said filter is performed by supplying fuel to exhaust gas flowing into said oxidation catalyst by said fuel supply means. In the exhaust gas purifying system for an internal combustion engine having an oxidation catalyst and a filter provided in series in an exhaust passage as per the above, it is possible to determine clogging of the oxidation catalyst with improved accuracy.

## Claims

1. An exhaust gas purifying system for an internal combustion engine comprising
an oxidation catalyst (14) having an oxidizing ability, provided in an exhaust passage (13) of an internal combustion engine (1);
a filter (18) that can trap particulate matter contained in exhaust gas, provided in the exhaust passage (13) downstream of said oxidation catalyst (14);
temperature detection means (31, 32) for detecting or estimating temperatures of an upstream portion and a downstream portion of said filter (18); and
fuel supply means (17) for supplying fuel into exhaust gas flowing into said oxidation catalyst (14);
**characterized by**
clogging determination means adapted to make such a determination that there is clogging of said oxidation catalyst (14), if the difference in the temperature of the upstream portion and the temperature of the downstream portion detected by said temperature detection means (31, 32) is larger than a predetermined value while regeneration control for said filter (18) is performed by supplying fuel to exhaust gas flowing into said oxidation catalyst (14) by said fuel supply means (17).

2. An exhaust gas purifying system for an internal combustion engine according to claim 1, wherein when it is determined by said clogging determination means that there is clogging of said oxidation catalyst (14) when fuel supply by said fuel supply means (17) is feedback-controlled based on the temperature of a portion of said filter (18), the feedback-control of fuel supply is prohibited.

3. An exhaust gas purifying system for an internal combustion engine according to claim 1, further comprising fuel supply appropriateness determination means for determining whether or not fuel supply by said fuel supply means (17) is appropriately effected, wherein when it is determined by said clogging determination means that there is clogging of said oxidation catalyst (14), determination by said fuel supply appropriateness determination means is prohibited.

4. An exhaust gas purifying system for an internal combustion engine according to claim 1, further comprising deposit amount estimation means for estimating the amount of the particulate matter deposited on said filter (18) while regeneration control for said filter (18) is performed, wherein when it is determined by said clogging determination means that there is clogging of said oxidation catalyst (14), said deposit amount estimation means estimates the amount of the particulate matter deposited on said filter (18) based on the temperature of the downstream portion of said filter (18) detected or estimated by said temperature detection means (31, 32).

5. An exhaust gas purifying system for an internal combustion engine according to claim 1, wherein when it is determined by said clogging determination means that there is clogging of said oxidation catalyst (14), a target temperature to be reached in regeneration control for said filter (18) is set based on the temperature of the downstream portion of said filter (18) detected or estimated by said temperature detection means (31, 32).

6. An exhaust gas purifying system for an internal combustion engine according to any one of claims 1 to 5, wherein determination by said clogging determination means is effected when the running state of said internal combustion engine (1) is in a steady running state.

## Patentansprüche

1. Abgasreinigungssystem für eine Brennkraftmaschine mit
einem Oxidationskatalysator (14) mit einer Oxidationsfähigkeit, der in einem Abgasdurchgang (13) einer Brennkraftmaschine (1) vorgesehen ist;
einem Filter (18), der im Abgas enthaltene Feststoffe fangen kann und in dem Abgasdurchgang (13) stromabwärts des Oxidationskatalysators (14) vorgesehen ist;
einer Temperaturerfassungseinrichtung (31, 32), um Temperaturen eines stromaufwärtigen Abschnitts und eines stromabwärtigen Abschnitts des Filters (18) zu erfassen oder zu schätzen; und
einer Kraftstoffzufuhreinrichtung (17), um einem Abgas, das in den Oxidationskatalysator (14) strömt, einen Kraftstoff zuzuführen;
**gekennzeichnet durch**
eine Verstopfungsbestimmungseinrichtung, die angepasst ist, eine derartige Bestimmung zu machen, dass der Oxidationskatalysator (14) verstopft ist, wenn der Unterschied bei der Temperatur des stromaufwärtigen Abschnitts und der Temperatur des stromabwärtigen Abschnitts, der **durch** die Temperaturerfassungseinrichtung (31, 32) erfasst wird, größer ist, als ein vorbestimmter Wert, während eine Regenerationssteuerung für den Filter (18) durchgeführt wird, indem einem Abgas, das in den Oxidationskatalysator (14) strömt, **durch** die Kraftstoffzufuhreinrichtung (17) ein Kraftstoff zugeführt wird.

2. Abgasreinigungssystem für eine Brennkraftmaschine gemäß Anspruch 1, wobei, wenn durch die Verstopfungsbestimmungseinrichtung bestimmt ist, dass der Oxidationskatalysator (14) verstopft ist, wenn eine Kraftstoffzufuhr basierend auf der Temperatur eines Abschnitts des Filters (18) durch die Kraftstoffzufuhreinrichtung (17) geregelt wird, die Regelung einer Kraftstoffzufuhr verhindert wird.

3. Abgasreinigungssystem für eine Brennkraftmaschine gemäß Anspruch 1, die ferner eine Kraftstoffzufuhrrichtigkeitsbestimmungseinrichtung aufweist, um zu bestimmen, ob oder ob nicht eine Kraftstoffzufuhr durch die Kraftstoffzufuhreinrichtung (17) passend bewirkt wird, wobei, wenn durch die Verstopfungsbestimmungseinrichtung bestimmt ist, dass der Oxidationskatalysators (14) verstopft ist, die Bestimmung durch die Kraftstoffzufuhrrichtigkeitsbestimmungseinrichtung verhindert wird.

4. Abgasreinigungssystem für eine Brennkraftmaschine gemäß Anspruch 1, die ferner eine Ablagerungsmengenschätzeinrichtung aufweist, um die Menge der Feststoffe zu schätzen, die an dem Filter (18) abgelagert sind, während eine Regenerationssteuerung für den Filter (18) durchgeführt wird, wobei, wenn durch die Verstopfungsbestimmungseinrichtung bestimmt ist, dass der Oxidationskatalysator (14) verstopft ist, die Ablagerungsmengenschätzeinrichtung basierend auf der Temperatur des stromabwärtigen Abschnitts des Filters (18), die durch die Temperaturerfassungseinrichtung (31, 32) erfasst oder geschätzt wurde, die Menge der Feststoffe, die an dem Filter (18) abgelagert sind, schätzt.

5. Abgasreinigungssystem für eine Brennkraftmaschine gemäß Anspruch 1, wobei, wenn durch die Verstopfungsbestimmungseinrichtung bestimmt ist, dass der Oxidationskatalysator (14) verstopft ist, eine Solltemperatur, die bei einer Regenerationssteuerung für den Filter (18) erreicht werden soll, basierend auf der Temperatur des stromabwärtigen Abschnitts des Filters (18) eingestellt wird, die durch die Temperaturerfassungseinrichtung (31, 32) erfasst oder geschätzt wird.

6. Abgasreinigungssystem für eine Brennkraftmaschine gemäß einem der Ansprüche 1 bis 5, wobei eine Bestimmung durch die Verstopfungsbestimmungseinrichtung bewirkt wird, wenn der Laufzustand der Brennkraftmaschine (1) ein gleichmäßiger Laufzustand ist.

## Revendications

1. Système de purification des gaz d'échappement pour un moteur à combustion interne comprenant
un catalyseur d'oxydation (14) possédant une capacité d'oxydation, prévu dans un passage d'échappement (13) d'un moteur à combustion interne (1) ;
un filtre (18) qui peut piéger les matières particulaires contenues dans les gaz d'échappement, prévu dans le passage d'échappement (13) en aval dudit catalyseur d'oxydation (14) ;
un moyen de détection de température (31, 32) destiné à détecter ou à estimer les températures d'une partie en amont et d'une partie en aval dudit filtre (18) ; et
un moyen d'alimentation en carburant (17) destiné à délivrer le carburant dans les gaz d'échappement entrant dans ledit catalyseur d'oxydation (14) ;
**caractérisé par**
un moyen de détermination de colmatage adapté pour effectuer une détermination telle qu'il existe un colmatage dudit catalyseur d'oxydation (14), si la différence entre la température de la partie en amont et la température de la partie en aval détectée par ledit moyen de détection de température (31, 30) est supérieure à une valeur prédéterminée alors que la commande de régénération pour ledit filtre (18) est réalisée en délivrant le carburant vers les gaz d'échappement entrant dans ledit catalyseur d'oxydation (14) par ledit moyen d'alimentation en carburant (17).

2. Système de purification des gaz d'échappement pour un moteur à combustion interne selon la revendication 1, dans lequel lorsqu'il est déterminé par ledit moyen de détermination de colmatage qu'il existe un colmatage dudit catalyseur d'oxydation (14) lorsque l'alimentation en carburant par ledit moyen d'alimentation en carburant (17) est commandée par rétroaction sur la base de la température d'une partie dudit filtre (18), la commande de rétroaction de l'alimentation en carburant est interdite.

3. Système de purification des gaz d'échappement pour un moteur à combustion interne selon la revendication 1, **caractérisé en ce qu'**il comprend un moyen de détermination d'opportunité d'alimentation en carburant destiné à déterminer si oui ou non l'alimentation en carburant par ledit moyen d'alimentation en carburant (17) est effectuée de manière appropriée, dans lequel lorsqu'il est déterminé par ledit moyen de détermination de colmatage qu'il existe un colmatage dudit catalyseur d'oxydation (14), la détermination par ledit moyen de détermination d'opportunité d'alimentation en carburant est interdite.

4. Système de purification des gaz d'échappement pour un moteur à combustion interne selon la revendication 1, comprenant de plus un moyen d'estimation de quantité de dépôt destiné à estimer la quantité de matières particulaires déposées sur ledit filtre (18) alors que la commande de régénération pour ledit filtre (18) est exécutée, dans lequel lorsqu'il est déterminé par ledit moyen de détermination de colmatage qu'il existe un colmatage dudit catalyseur d'oxydation (14), ledit moyen d'estimation de quantité de dépôt estime la quantité de matières particulaires déposées sur ledit filtre (18) sur la base de la température de la partie en aval dudit filtre (18) détectée ou estimée par ledit moyen de détection de température (31, 32).

5. Système de purification des gaz d'échappement pour un moteur à combustion interne selon la revendication 1, dans lequel lorsqu'il est déterminé par ledit moyen de détermination de colmatage qu'il existe un colmatage dudit catalyseur d'oxydation (14), une température cible devant être atteinte pendant la commande de régénération pour ledit filtre (18) est établie sur la base de la température de la partie en aval dudit filtre (18) détectée ou estimée par ledit moyen de détection de température (31, 32).

6. Système de purification des gaz d'échappement pour un moteur à combustion interne selon l'une quelconque des revendications 1 à 5, dans lequel la détermination par ledit moyen de détermination de colmatage est effectuée lorsque l'état de fonctionnement du moteur à combustion interne (1) se trouve dans un état de fonctionnement constant.
